# EUROPEAN PATENT APPLICATION

(11) **EP 4 578 637 A1**
(43) Date of publication of application: **02.07.2025**
(21) Application number: 23856995.8
(22) Date of filing: 05.07.2023
(51) Int. Cl.: B29C 65/42, B29C 65/64, B32B 15/08, B65H 37/04, C09J 7/30, C09J 163/00, C09J 171/10

(54) **CONNECTED BODY OF METAL MATERIALS AND METHOD FOR CONNECTING METAL MATERIALS**

(30) Priority: 26.08.2022 JP 2022134661
(71) Applicant: Resonac Corporation, Tokyo 105-7325 (JP)
(72) Inventor: TAKAHASHI, Nobuyuki, Tokyo 105-8518 (JP); SAITO, Hayato, Tokyo 105-8518 (JP)
(74) Representative: Strehl & Partner mbB
(86) International application number: PCT/JP2023/024875
(87) International publication number: WO 2024/042878

(57) **Abstract**

A connected body of metal materials having an overlapping portion in which an end portion A of a metal material A and an end portion B of a metal material B are overlapped with each other via a film containing a thermoplastic resin as a main component, in which the film is a film that has undergone melting and solidification in the overlapping portion.

## Description

### Technical Field

The present invention relates to a connected body of metal materials formed by overlapping and connecting an end portion A of a metal material A and an end portion B of a metal material B each other, and a method for connecting metal materials suitable for an application in which the end portion A of the metal material A and the end portion B of the metal material B are overlapped and connected to each other.

### Background Art

A method is disclosed in which a starting end of a first roll material and a terminal end of a second roll material are overlapped, bonded, and connected via a double-sided pressure-sensitive adhesive tape (PTL 1).

In connection by a double-sided pressure-sensitive adhesive tape or a single-sided pressure-sensitive adhesive tape (hereinafter, collectively referred to as a pressure-sensitive adhesive tape), there is a problem of contamination of a production line due to adhesion of a pressure-sensitive adhesive component such as a matrix resin which is a resin composition constituting a pressure-sensitive adhesive layer of the pressure-sensitive adhesive tape or a tackifier to a conveyance path of the production line or a mold.

In particular, when the pressure-sensitive adhesive tape is peeled off due to an accident, the pressure-sensitive adhesive layer of the peeled pressure-sensitive adhesive tape is exposed, and contamination of the production line due to adhesion of the pressure-sensitive adhesive component to the conveying path of the production line or the mold becomes a serious problem.

When the metal material is immersed in a chemical liquid tank, there is also a problem that the pressure-sensitive adhesive component such as a tackifier is dissolved in the chemical liquid, and the chemical liquid tank is contaminated early. In addition, there is a problem that heat resistance and chemical resistance are low.

As other connecting means, connection by welding, connection by a liquid-type adhesive, connection by a film-shaped thermosetting adhesive (hereinafter referred to as a thermosetting adhesive film), and connection by caulking are conceivable, but each has the following problems.

In the case of the connection by welding, once welding is performed, disassembly cannot be performed without destruction. For this reason, there is a problem that it is not possible to easily perform an operation of reconnection (hereinafter, also referred to as repair) with respect to a failure such as deviation of a connection portion. In addition, there is a problem that sparks are generated, and metal powder is scattered at the time of welding, which deteriorates the working environment.

In the case of the connection by a liquid-type adhesive, a coating step of coating a liquid-state thermosetting resin composition and a curing step of polymerizing and curing the resin composition after coating are required. In the coating step, it takes time to coat the resin composition, and in the curing step, it takes time for the polymerization reaction. Thus, the connection by the liquid-type adhesive requires a long process time, and thus has a problem of lacking convenience. In addition, since it is an amorphous liquid, it is difficult to control the thickness of coating, the amount of coating, and the range of coating for connection with good reproducibility. In addition, in the case of a liquid thermosetting adhesive, repair is impossible or difficult as in the case of welding.

In the case of the connection by a thermosetting adhesive film, a coating step is not necessary, and thus the process time can be shortened, but repair cannot be performed after connection.

In addition, when the thermosetting adhesive film is a B-staged film, since the polymerization reaction easily proceeds at ordinary temperature, the storage stability is poor and the long-term storage at ordinary temperature cannot be performed. Therefore, when the thermosetting adhesive film is a B-staged film, it is necessary to store the film at a low temperature, a low-temperature storage is required, and it is difficult to store a large amount of the film for a long period of time, which is inconvenient.

In the case of the connection by caulking, metal materials are overlapped with each other for caulking, and a protrusion due to caulking is generated. Therefore, there is a problem that it is difficult to apply to a low-profile manufacturing line because the thickness increases at a caulked portion which is a connection portion. Further, a space for the flat metal material larger than the caulking diameter is required for the caulking, and there is a problem that sufficient connecting strength cannot be obtained in the metal material having a complicated shape or a narrow pitch. In addition, in the case of passing the chemical liquid through a plurality of chemical liquid tanks, there is a problem that the chemical liquid is often carried into the next tank, the contamination of the chemical liquid progresses, and the life of the chemical liquid is shortened.

### Citation List

### Patent Literature

PTL 1: JP 2016-175768 A

### Summary of Invention

### Technical Problem

The present invention has been made in view of such a technical background, and an object of the present invention is to provide a connection technique in which there is no concern of contamination of a production line due to a pressure-sensitive adhesive component, repair is possible, a process time is short, and a thickness change in a connection portion is small.

### Solution to Problem

In order to achieve the above object, the present invention provides the following means.

### <Connected Body of Metal Materials>

[1] A connected body of metal materials having an overlapping portion in which an end portion A of a metal material A and an end portion B of a metal material B are overlapped with each other via a film containing a thermoplastic resin as a main component, in which the film is a film that has undergone melting and solidification in the overlapping portion.
[2] The connected body of metal materials according to [1], in which the metal material A and the metal material B are at least one selected from the group consisting of a metal plate having a thickness of 1 mm or less and a metal foil having a thickness of 1 mm or less.
[3] The connected body of metal materials according to [1] or [2], in which the metal material A and the metal material B have a belt-like shape, and the metal material A and the metal material B are connected so as to be continuous in a longitudinal direction.
[4] The connected body of metal materials according to [3], in which the metal material A and the metal material B are roll materials obtained by winding at least one selected from the group consisting of a metal plate and a metal foil into a roll shape.
[5] The connected body of metal materials according to any one of [1] to [4], in which the film is interposed over an entire surface where the end portion A and the end portion B overlap each other.
[6] The connected body of metal materials according to any one of [1] to [5], in which the thermoplastic resin is an amorphous thermoplastic resin.
[7] The connected body of metal materials according to [6], in which the amorphous thermoplastic resin is at least one selected from the group consisting of a thermoplastic epoxy resin and a phenoxy resin.
[8] The connected body of metal materials according to [7], in which the amorphous thermoplastic resin is an amorphous thermoplastic resin having an epoxy equivalent of 1,600 or more or an amorphous thermoplastic resin not containing an epoxy group.
[9] The connected body of metal materials according to any one of [1] to [8], in which the film has a pressure-sensitive adhesive material, and the pressure-sensitive adhesive material performs a temporary fixing function of the film and does not perform an adhesive function.
   <Method for Connecting Metal Materials>
[10] A method for connecting metal materials, including: connecting a metal material A and a metal material B by melting and solidifying a film in an overlapping portion in which an end portion A of the metal material A and an end portion B of the metal material B are overlapped with each other via the film containing a thermoplastic resin as a main component.
[11] The method for connecting metal materials according to [10], in which the film has a thickness of 10 µm to 3 mm.

### Advantageous Effects of Invention

According to the present invention, it is possible to provide a connection technique in which there is no concern of contamination of a production line due to a pressure-sensitive adhesive component, repair is possible, a process time is short, and a thickness change in a connection portion is small.

### Brief Description of Drawings

Fig. 1 is a plan view of a connected body of metal materials according to an embodiment of the present invention.
Fig. 2 is a plan view of a connected body of metal materials in Comparative Example 1.

### Description of Embodiments

Hereinafter, embodiments of the present invention will be described in detail.

In the description herein, the term "connection" means that an object and another object are connected to each other so as to be continuous, and joining is a subordinate concept thereof. In the description herein, the term "joining" means that an object and another object are connected to each other so as to be in contact with each other, and adhesion and welding are subordinate concepts thereof. The term "adhesion" means that two adherends (objects to be adhered) are brought into a joined state via an organic material (thermosetting resin or thermoplastic resin) such as a tape or an adhesive. The term "welding" means that the surface of a thermoplastic resin is melted by heat and cooled to cause entanglement due to molecular diffusion, thereby forming a joined state.

### [Connected Body of Metal Materials]

The connected body of metal materials has an overlapping portion 4 in which an end portion A: 5 of a metal material A: 1 and an end portion B: 6 of a metal material B: 2 are overlapped with each other via a film 3 containing a thermoplastic resin as a main component (hereinafter, also simply referred to as a "film"). The film 3 is a film that has undergone melting and solidification in the overlapping portion 4.

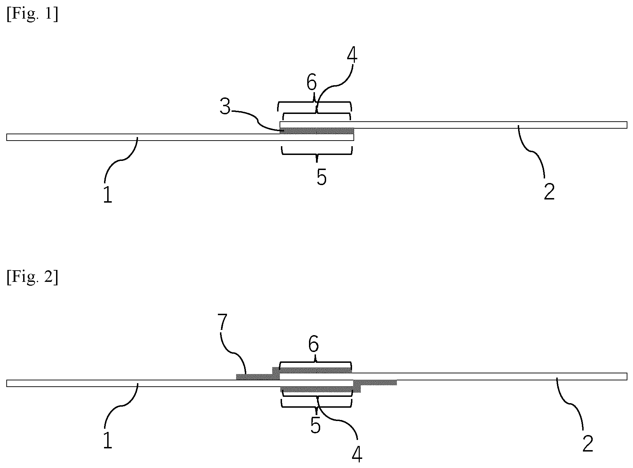

As shown in Fig. 1, the connected body of the present embodiment has an "overlapping portion 4" in which the end portion B: 6 of the metal material B: 2 is placed and overlapped on the end portion A: 5 of the metal material A: 1 via the film 3.

In the description herein, the "main component" means a component having the highest content among the resin components in the film. The film contains the resin component in an amount of preferably 50% by mass or more, more preferably 70% by mass or more, further preferably 80% by mass or more, and particularly preferably 90% by mass or more.

By melting and solidifying the film 3 at the overlapping portion 4, the film 3 and the end portion A: 5 of the metal material A: 1 are joined to each other, the film 3 and the end portion B: 6 of the metal material B: 2 are joined to each other, and the metal material A: 1 and the metal material B: 2 are connected to each other to form a connected body. The connected body of the present invention obtained by melting and solidifying the film in the overlapping portion 4 exhibits excellent connecting strength.

Since the connecting strength is affected by a large number of factors such as the thickness of the film, the molecular weight and chemical structure of the polymer constituting the film, mechanical properties, and viscoelastic properties, in addition to the strength of the interfacial interaction acting between the film and the metal material, the details of the mechanism by which the connected body of the present invention exhibits excellent connecting strength are not clear, but it is presumed that the formation of chemical bonds and intermolecular forces such as hydrogen bonds and van der Waals forces at the interfaces between the film and the metal material A and between the film and the metal material B is a main factor. However, in the above-mentioned connected body, since the state or the characteristics of the interface between the film and the metal material are specified by analyzing the chemical structure of the very thin interface of nanometer level or less, it is impossible or impractical to specify the connected body of the present invention by directly specifying the state or the characteristics of the interface between the film and the metal material at present.

The connected body of the present invention is connected by the film 3 that has undergone melting and solidification in the overlapping portion 4. The film 3 that has undergone melting and solidification in the overlapping portion 4 and the film before melting and solidification can be distinguished from each other by the presence or absence of roundness of the corner portion of the film and the presence or absence of variation in thickness.

The film before melting and solidification has a sharp cut surface formed in the production process of the film, but since the film 3 constituting the connected body of metal materials of the present invention is the film 3 subjected to melting and solidification in the overlapping portion 4, it is presumed that the film does not have a sharp cut surface formed in the production process of the film, and the corner portion of the film is rounded.

Since the film is usually produced so as to have a uniform thickness, no variation in thickness is observed in the film before melting and solidification, but since the film 3 constituting the connected body of metal materials of the present invention is the film 3 that has undergone melting and solidification in the overlapping portion 4, it is presumed that there is a variation in thickness that inevitably occurs in the process of melting and solidification. As a method for measuring the thickness variation, any appropriate method may be employed, such as a method of measuring the thicknesses at a plurality of arbitrary points in the plane of the measurement target and statistically processing the measured thicknesses. Examples of such method for measuring a thickness include a method involving physical contact with a micrometer, a microcaliper, or a dial gauge; a non-contact method for measuring the transmittance or reflectance of an α-ray, an X-ray, an infrared ray, or an electromagnetic wave with respect to a measurement target; and a method for cutting a measurement target at an arbitrary measurement position and observing the measurement target with an optical microscope or an electron microscope, and a combination thereof may be adopted.

In the film 3 that has undergone melting and solidification in the overlapping portion 4, it is presumed that the surface texture of the end portion A: 5 is transferred to the film surface in contact with the end portion A: 5 of the metal material A: 1, and the surface texture of the end portion B: 6 is transferred to the film surface in contact with the end portion B: 6 of the metal material B: 2. Here, the surface texture means fine irregularities formed on the surface of the metal material in the course of machining of the metal material.

The connection of the present invention utilizes a phase change (solid to liquid to solid) of a film containing a thermoplastic resin as a main component, and is a connection not accompanied by a chemical reaction such as a polymerization reaction. Since the film is used in a state where the polymerization reaction is completed, the polymerization reaction does not proceed even at ordinary temperature, and the film can be stored for a long period of time at ordinary temperature. The film can be softened and melted by heat and can be easily peeled off, and therefore, the film is excellent in disassemblability. In addition, since the film has a thermoplastic property, softening, melting, and solidification can be repeated reversibly, and the film is also excellent in repairability. The connection using the film utilizes a phase change (solid to liquid to solid) of the film, and has an advantage that the time is shorter than that of a polymerization reaction accompanied by formation of a chemical bond, and the process time is short. Since the film is not a liquid at ordinary temperature but a solid in which a polymerization reaction is completed, and adheres by a mechanism different from pressure-sensitive adhesion, it is not necessary to use a pressure-sensitive adhesive material containing a pressure-sensitive adhesive component for the purpose of adhesion, and there is no concern about contamination of a production line due to the pressure-sensitive adhesive component. Since the polymerization reaction is completed, the film also has excellent heat resistance and chemical resistance. In addition, since the connection is made using a thin film, there is an advantage that a change in thickness at the connection portion is less than that in caulking.

The connected body is preferably formed via the film 3 over the entire surface of the overlapping surfaces of the end portion A: 5 of the metal material A: 1 and the end portion B: 6 of the metal material B: 2.

### <Metal Material>

The shapes of the metal material A and the metal material B are not particularly limited as long as they have a flat plate shape, and the present invention is suitable for use in connection of at least one selected from the group consisting of metal plates having a thickness of 1 mm or less and metal foils having a thickness of 1 mm of less, and is suitable for use in connection in which the metal material A and the metal material B are both belt-shaped (long), and the end portion A of the metal material A and the end portion B of the metal material B are overlapped and connected so as to be continuous in the longitudinal direction. Specifically, the present invention is suitable for an application of connecting a roll material in which the metal foil is wound in a roll shape, and is particularly suitable for an application of connecting a trailing end of a preceding roll material and a leading end of a subsequent roll material which are fed into a production line, or an application of connecting a trailing end and a leading end in a case where there is a cut in the roll material in the roll.

In the description herein, the term "metal foil" refers to a thin sheet of metal having high ductility.

The type of metal of the metal material A and the metal material B is also not particularly limited, and is preferably at least one selected from the group consisting of aluminum, iron, copper, magnesium, and alloys thereof, and from the viewpoint of the strength of the interfacial adhesive force with the film, at least one selected from the group consisting of an aluminum alloy and an iron alloy is particularly preferable because a strong connection can be realized.

In addition, at least one surface selected from the group consisting of the metal material A and the metal material B may be subjected to a metal plating treatment or may be coated with a resin.

Examples of the resin include polyolefins and acid-modified products thereof, polystyrene, polymethyl methacrylate, AS resin, ABS resin, thermoplastic aromatic polyesters such as polyethylene terephthalate and polybutylene terephthalate, polycarbonates, polyimides, polyamides, polyamideimides, polyetherimides, polyethersulfones, polyphenylene ethers and modified products thereof, polyphenylene sulfides, polyoxymethylenes, polyarylates, polyether ketones, polyether ether ketones, polyether ketone ketones, and thermoplastic epoxy resins.

A high adhesive force may be obtained between the film and the metal material by performing a pretreatment on a portion of the metal material A and the metal material B that comes into contact with the film. As the pretreatment, a treatment of cleaning the surface of the metal material or a treatment of imparting unevenness to the surface is preferable. In the case where the metal material is made of aluminum or iron, at least one pretreatment selected from the group consisting of a degreasing treatment, a UV ozone treatment, a blast treatment, a polishing treatment, a plasma treatment, and an etching treatment is suitable.

Only one type of pretreatment may be performed, or two or more types of pretreatment may be performed. As a specific method of the pretreatment, a known method can be used.

### <Film>

In the description herein, the term "film" means a thin film of a resin containing a thermoplastic resin as a main component or a thin film of a resin composition containing a thermoplastic resin as a main component.

From the viewpoint of sufficiently imparting the properties of the thermoplastic resin to the film, the content of the thermoplastic resin is preferably 60% by mass or more, more preferably 70% by mass or more, further preferably 80% by mass or more, and most preferably 90% by mass or more of the resin component in the film.

The thermoplastic resin is preferably an amorphous thermoplastic resin. The amorphous thermoplastic resin in the present embodiment means a resin in which crystals are not present or the content thereof is very small even if crystals are present, and to be specific, the heat of fusion of the crystals is 15 J/g or less.

The heat of fusion is calculated from the area of the endothermic peak of DSC (differential scanning calorimeter) and the weight of the thermoplastic resin component. When an inorganic filler is contained in the film, the heat of fusion is calculated from the weight of the thermoplastic resin component excluding the inorganic filler. To be specific, 2 to 10 mg of a sample is weighed and placed in an aluminum pan, the temperature is raised from 23°C to 200°C or higher at 10°C/min using DSC (DSC8231, manufactured by Rigaku Corporation) to obtain a DSC curve, and then the heat of fusion can be calculated from the area of the endothermic peak at the time of melting obtained from the DSC curve and the weighed value.

The heat of fusion is more preferably 11 J/g or less, further preferably 7 J/g or less, still further preferably 4 J/g or less, and it is most preferable that the melting peak is equal to or lower than the detection limit.

In the film containing an amorphous thermoplastic resin having a heat of fusion of 15 J/g or less as a main component, a rapid decrease in viscosity as observed in a conventional hot melt adhesive does not occur during heating for melting, and a low viscosity (0.001 to 100 Pa·s) state is not reached even in a high temperature region of higher than 200°C. Therefore, the film does not melt and flow out, the thickness after solidification can be maintained within a predetermined range, and a high connecting force can be stably obtained.

In a case where the amorphous thermoplastic resin which is a main component of the film contains a small amount of crystals, the melting point thereof is preferably 50°C to 400°C, more preferably 60°C to 350°C, and further preferably 70°C to 300°C. When the melting point is in the range of 50°C to 400°C, the film is efficiently deformed and melted by heating, and effectively wets and spreads on the respective joining surfaces of the film and the metal material A and the film and the metal material B, so that a high connecting force can be obtained.

In the description herein, the melting point of the thermoplastic resin means a melting peak temperature measured by DSC. When no melting peak is obtained or when the heat of fusion is 15 J/g or less, a temperature obtained by adding 70°C to the glass transition temperature is defined as the melting point. The glass transition point means a temperature at the start of descent of a DSC curve in the second cycle of a cycle in which the temperature is raised to 200°C by DSC, then cooled to 40°C or lower, and further heated to 200°C.

The amorphous thermoplastic resin is preferably at least one selected from the group consisting of a thermoplastic epoxy resin and a phenoxy resin. Since the thermoplastic epoxy resin and the phenoxy resin have a low cohesive force in the resin, they have a strong interaction with the metal material and can connect the metal material with a higher connecting force than a conventional crystalline hot-melt adhesive. In addition, since the thermoplastic epoxy resin and the phenoxy resin have excellent flexibility and toughness, a high strength connection can be obtained.

The amorphous thermoplastic resin preferably has an epoxy equivalent of 1,600 or more, or does not contain an epoxy group.

The epoxy equivalent (the weight of the thermoplastic resin containing 1 mol of epoxy group) is the value of the epoxy equivalent of the thermoplastic resin contained in the film before connecting, and is a value measured by a method defined in JIS K 7236:2001 (unit: "g/eq. "). Specifically, the epoxy equivalent is a value obtained by adding a brominated tetraethylammonium acetic acid solution using a potentiometric titration device, using a 0.1 mol/L perchloric acid-acetic acid solution, and calculating a numerical value of a solvent diluted product (resin varnish) as a value in terms of a solid content from a nonvolatile component. In the case of a mixture of two or more resins, the epoxy equivalent can also be calculated from the content of each resin and the epoxy equivalent.

The epoxy equivalent of the amorphous thermoplastic resin is more preferably 2,000 or more, further preferably 5,000 or more, and still further preferably 9,000 or more, and it is most preferable that the epoxy equivalent is equal to or higher than the detection limit and the epoxy group is not substantially detected. The epoxy equivalent being equal to or higher than the detection limit means that the epoxy group is not detected when the epoxy equivalent is measured based on JIS K 7236:2001 to be described later.

By using a film containing an amorphous thermoplastic resin having an epoxy equivalent of 1,600 or more as a main component, a rapid decrease in viscosity can be more effectively suppressed, and a higher connecting force can be stably obtained.

### <<Thermoplastic Epoxy Resin>>

The thermoplastic epoxy resin is preferably a polymer of (a) a bifunctional epoxy resin monomer or a bifunctional epoxy resin oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer proceeds preferentially, and a thermoplastic epoxy resin having desired properties can be obtained.

The (a) bifunctional epoxy resin monomer means an epoxy resin monomer having two epoxy groups in the molecule, and the bifunctional epoxy resin oligomer means an epoxy resin oligomer having two epoxy groups in the molecule.

Specific examples of the component (a) include bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester), bifunctional glycidylamine type epoxy resins (e.g., diglycidyl aniline, diglycidyl toluidine), bifunctional heterocyclic epoxy resins, bifunctional diarylsulfone type epoxy resins, hydroquinone type epoxy resins (e.g., hydroquinone diglycidyl ether, 2,5-di-tert-butylhydroquinone diglycidyl ether, resorcin diglycidyl ether), bifunctional alkylene glycidyl ether-based compounds (e.g., butanediol diglycidyl ether, butenediol diglycidyl ether, butynediol diglycidyl ether), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin), bifunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group of the component (b) include mononuclear aromatic dihydroxy compounds having one benzene ring, such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds into which an allyl group is introduced, such as diallyl resorcin, diallyl bisphenol A, and triallyl dihydroxybiphenyl; and dibutyl bisphenol A.

Specific examples of the carboxy group-containing compound of the component (b) include adipic acid, succinic acid, malonic acid, cyclohexanedicarboxylic acid, phthalic acid, isophthalic acid, and terephthalic acid.

Examples of the mercapto group-containing bifunctional compound of the component (b) include ethylene glycol bisthioglycolate and ethylene glycol bisthiopropionate.

Specific examples of the isocyanate group-containing bifunctional compound of the component (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the component (b) include 2,2-bis(4-cyanatophenyl)propane, 1,1-bis(4-cyanatophenyl)ethane, and bis(4-cyanatophenyl)methane.

Among the compounds of the component (b), a bifunctional compound having a phenolic hydroxy group is preferable from the viewpoint of obtaining a thermoplastic polymer, a bifunctional compound having two phenolic hydroxy groups and having a bisphenol structure or a biphenyl structure is preferable from the viewpoint of heat resistance and connectivity, and at least one selected from the group consisting of bisphenol A, bisphenol F, and bisphenol S is preferable from the viewpoint of heat resistance and cost.

In a case where the component (a) is a bisphenol A type epoxy resin, a bisphenol F type epoxy resin, a bisphenol S type epoxy resin, or a biphenyl type epoxy resin, and the component (b) is at least one selected from the group consisting of bisphenol A, bisphenol F, and bisphenol S, a polymer obtained by polymerization of the component (a) and the component (b) has a main skeleton of a para-phenylene structure and an ether bond, and has a structure having a main chain formed by connecting the para-phenylene structure and the ether bond by an alkylene group, and a hydroxy group generated by polyaddition which is arranged in a side chain.

The linear structure composed of a para-phenylene skeleton can increase the mechanical strength of the polymer after polymerization, and the hydroxy group arranged in the side chain can improve the adhesiveness to the metal material. As a result, a high connecting strength can be realized while maintaining the adhesion property of the thermosetting resin. Further, in the case of a thermoplastic resin, recycling and repairing become possible by softening and melting the resin with heat, and recyclability and repairability, which are problems in a thermosetting resin, can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of a direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among these, bisphenol A, bisphenol F, and bisphenol S are preferable from the viewpoint of cost, connectivity, viscosity, and heat resistance. These may be used singly, or two or more kinds thereof may be used in combination.

The phenoxy resin has a chemical structure similar to that of the epoxy resin, and has a main skeleton of a para-phenylene structure and an ether bond, and has a structure having a main chain formed by connecting the para-phenylene structure and the ether bond and a hydroxy group arranged in a side chain.

### <<Physical Properties of Thermoplastic Epoxy Resin and Phenoxy Resin>>

The weight-average molecular weight of the thermoplastic epoxy resin and the phenoxy resin, which is a value in terms of polystyrene by gel permeation chromatography (GPC) measurement, is preferably 10,000 to 500,000, more preferably 18,000 to 300,000, and further preferably 20,000 to 200,000. The weight-average molecular weight is calculated from an elution peak position detected by GPC, and is a value of a molecular weight in terms of standard polystyrene. When the weight-average molecular weight is within this value range, the balance between thermoplasticity and heat resistance is good, a connected body is efficiently obtained by melting, and the heat resistance thereof is also high. When the weight-average molecular weight is 10,000 or more, the heat resistance is excellent, and when the weight-average molecular weight is 500,000 or less, the viscosity at the time of melting is low, and the connectivity is high.

### <<Components other than Resin Component in Film>>

If necessary, the film may or may not contain a filler or an additive as a component other than the resin component as long as the object of the present invention is not impaired.

Examples of the filler include an inorganic filler and an organic filler (resin powder).

Examples of the inorganic filler include spherical fused silica, metal powders of metals such as iron, silica sand, talc, calcium carbonate, mica, acid clay, diatomaceous earth, kaolin, quartz, titanium oxide, silica, phenol resin microballoons, and glass balloons.

When the film contains a filler, the content of the filler in 100% by volume of the total amount of the film is preferably 50% by volume or less, more preferably 30% by volume or less, further preferably 20% by volume or less, and most preferably 10% by volume or less. The volume of the filler can be determined by dividing the weight of the filler contained in the film by the apparent specific gravity of the filler.

The content of the resin component in 100% by volume of the total amount of the film is preferably 10% by volume or more, more preferably 20% by volume or more, further preferably 30% by volume or more, still further preferably 50% by volume or more, and in one aspect, 80% by volume or more, in another aspect, 90% by volume or more, and in another aspect, 99% by volume or more.

Examples of the additive include an antifoaming agent, a coupling agent such as a silane coupling agent, and a pigment, and one or more of these may be contained.

The content of the additive in the film is preferably 10% by mass or less, more preferably 5% by mass or less, and further preferably 1% by mass or less.

The content of the resin component in the film is preferably 10% by mass or more, more preferably 20% by mass or more, further preferably 30% by mass or more, still further preferably 50% by mass or more, and in one aspect, 80% by mass or more, in another aspect, 90% by mass or more, and in another aspect, 99% by mass or more.

### <<Shape and Physical Properties of Film>>

The film before joining preferably has a thickness of 10 µm to 3 mm.

By setting the thickness of the film to 10 µm to 3 mm, the film can be efficiently spread on the respective joining surfaces of the film and the metal material A and the film and the metal material B by heating and pressurization, and a high connecting force can be obtained.

From the viewpoint of obtaining a connected body having excellent connectivity in a short process time, the thickness of the film before joining is more preferably 1 mm or less, further preferably 0.5 mm or less, still further preferably 0.3 mm or less, particularly preferably 0.2 mm or less, and most preferably 0.1 mm or less.

On the other hand, from the viewpoint of handleability, the thickness of the film before joining is preferably 10 µm or more, more preferably 20 µm or more, and further preferably 30 µm or more.

The film may be a single layer, or the film may be a laminated body composed of a plurality of layers. The layer of the thermoplastic resin is preferably a single layer from the viewpoint of ease of production and from the viewpoint of improving the connecting force. A plurality of layers may be formed by laminating the thermoplastic resin on a film base material composed of a resin having a melting point higher than that of the resin composition. **In** such a case, since the resin film base material does not melt and the thickness of the resin film base material remains when the resin film base material is heat-welded to the metal base material, it is possible to maintain a favorable connecting force.

**In** addition, the film may have tackiness as long as the connecting force and the heat resistance thereof are not impaired.

Tackiness may be imparted by mixing a tackifier with the thermoplastic resin, or by applying a pressure-sensitive adhesive material containing a pressure-sensitive adhesive component such as a tackifier to the film. It is preferable that the pressure-sensitive adhesive has a temporarily fixing function of the film and does not have an adhesive function. The pressure-sensitive adhesive material that has the temporary fixing function of the film and does not have the adhesive function is, for example, a pressure-sensitive adhesive material that remains in the plane of the joining surface and is not exposed to the outside of the plane.

The pressure-sensitive adhesive material may be applied to the entire joining surface, or may be applied to a part of the joining surface, such as a stripe shape, a dot shape, a lattice shape, or a tile shape (a shape in which a plurality of squares are arranged with a gap therebetween). The smaller the coating area, the smaller the tackiness, but it is possible to reduce the risk that the pressure-sensitive adhesive material is exposed to the outside from the end surface of the film after connection to cause contamination.

In a conventional pressure-sensitive adhesive tape, the joining force between the metal material and the film is borne only by the pressure-sensitive adhesiveness of the pressure-sensitive adhesive layer of the pressure-sensitive adhesive tape, but in the case of the thermoplastic film, the joining force is borne by the adhesion due to the melting and solidification of the thermoplastic resin as described above, and therefore, the tackiness is preferably such that the temporary fixing function is exhibited. That is, when the film is disposed between metal materials, the tackiness may be an extent that the film is not attached to the metal material, and the resistance is increased (the film may be less likely to slip) when a force in the shear direction is applied.

For the purpose of imparting tackiness to such an extent that a temporary fixing function is exhibited, the coating amount of the pressure-sensitive adhesive material is preferably suppressed to the minimum extent that temporary pressing (slip prevention) of the film can be performed.

In the conventional pressure-sensitive adhesive tape, when there is a portion where the pressure-sensitive adhesive layer protrudes at the end portion of the mating surface, the pressure-sensitive adhesive component adheres to a conveying path of the production line or a mold, and contamination may occur. In addition, when the pressure-sensitive adhesive tape is peeled off in the production line for some reason, the pressure-sensitive adhesive layer is exposed, and therefore, there is a concern that the pressure-sensitive adhesive component adheres to the conveying path of the production or the mold line to cause contamination.

In addition, the end surface of the belt-shaped metal material is not necessarily a straight line, and in such a case, when the metal material and the double-sided pressure-sensitive adhesive tape are overlapped and bonded to prepare a connected body, the double-sided pressure-sensitive adhesive tape having a straight line shape and the belt-shaped metal material cannot be completely overlapped, and the connected body has both or one of (a) the double-sided pressure-sensitive adhesive tape is exposed or (b) a non-bonded metal material portion is present. In the case of (a) above, the pressure-sensitive adhesive component may adhere to a conveying path of a production line or a mold, resulting in contamination. In the case of (b) above, the chemical liquid tends to accumulate in the non-bonded portion, and when passing through a plurality of chemical liquid layers, the amount of the chemical liquid brought in increases, and the contamination of the chemical liquid layer may proceed quickly.

According to the present invention in which the joining force is borne by the adhesion due to melting and solidification of the thermoplastic resin, a pressure-sensitive adhesive material for joining is not required, and even when a pressure-sensitive adhesive is used for the purpose of positioning, the use of the pressure-sensitive adhesive can be minimized, and therefore, any of the above-mentioned problems relating to the conventional pressure-sensitive adhesive tape can be avoided.

The breaking strength of the film in the connected body of the metal material A and the metal material B connected by the film is preferably 20 to 1000 N/25 mm.

The breaking strength of the film in the connected body is more preferably 50 to 1000 N/25 mm, and most preferably 100 to 1000 N/25 mm.

The breaking strength when the metal material A and the metal material B are connected to each other using the film is a tensile strength at the time of breaking per 25 mm portion of the film width, which is measured under the conditions described in the section of Examples.

### <<Method for Producing Film>>

The method for producing a film containing a thermoplastic resin as a main component is not particularly limited. For example, the film may be obtained by heating and polymerizing a monomer or an oligomer of a bifunctional epoxy compound to obtain a resin composition, adding a solvent to the obtained resin composition as necessary, applying the resin composition onto a release film, curing and drying the resin composition, and pressurizing the resin composition as necessary. In addition, the polymerization reaction may be carried out after applying onto the release film, may be carried out after obtaining the film, or may be a combination thereof.

### [Method for Connecting Metal Materials]

A method for producing a connected body according to the present embodiment includes a step of connecting a metal material A and a metal material B by melting and solidifying a film in an overlapping portion 4 in which an end portion A: 5 of the metal material A: 1 and an end portion B: 6 of the metal material B: 2 are overlapped with each other via the film containing a thermoplastic resin as a main component. By melting and solidifying the film at the overlapping portion 4, the film 3 and the end portion A: 5 of the metal material A: 1 are joined to each other, and the film 3 and the end portion B: 6 of the metal material B: 2 are joined to each other, and the metal material A and the metal material B are connected to each other.

The metal material and the film are the same as those constituting the above-described connected body, and the description thereof will be omitted.

### <Melting and Solidification of Film>

The method for melting the film is not particularly limited as long as it is a means capable of heating and melting the film. Specific examples thereof include melting by at least one method selected from the group consisting of contact heating, hot air heating, hot pressing, impulse heater heating, hot plate welding, infrared heating, ultrasonic welding, vibration welding, and high-frequency induction welding. Among them, from the viewpoint of ease of production and shortening of the process, melting by at least one selected from the group consisting of impulse heater heating and hot pressing is preferred.

In the case of hot pressing, it is more preferable to apply heat and pressurization under conditions of 100 to 400°C and 0.001 to 20 MPaG.

The heating condition is more preferably 100°C to 300°C, further preferably 120°C to 250°C, and most preferably 150°C to 220°C. By heating at 100 to 400°C, the film is efficiently deformed and melted to effectively wet and spread on the respective joining surfaces of the film and the metal material A, and the film and the metal material B, so that a high connecting force can be obtained.

The pressurizing conditions are preferably 0.001 to 20 MPaG, more preferably 0.005 to 10 MPaG, and most preferably 0.01 to 5 MPaG. By pressurizing at 0.001 to 20 MPaG, the film is efficiently deformed and effectively wet and spread, so that a high connecting force can be obtained.

By melting and solidifying the film, the film and the metal material A, and the film and the metal material B are respectively joined, and the metal material A and the metal material B are connected.

In the case of ultrasonic welding, the oscillation frequency is preferably 10 to 70 kHz, and more preferably 15 to 40 kHz.

The ultrasonic application time is preferably 0.1 to 3 seconds, and more preferably 0.2 to 2 seconds from the viewpoint of adhesion property and appearance.

In a case where pressure is applied at the time of applying ultrasonic waves, the applied pressure is preferably 0.01 to 20 MPaG, more preferably 0.1 to 10 MPaG, and further preferably 0.2 to 5 MPaG. When the pressure is in such a range, the film is efficiently deformed to effectively wet and spread on the adhesion surface, so that a high adhesive force can be obtained.

In the case of high-frequency induction welding, the output may be in the range of 100 to 5000 W, and the oscillation time may be adjusted according to the size and type of the resin base material, and is, for example, preferably 1.0 to 10.0 seconds, and more preferably 1.5 to 8.0 seconds.

Examples of the method for solidifying the molten film include a method in which the film is allowed to cool at ordinary temperature and a method in which the film is allowed to cool using a cooling device. The term "ordinary temperature" means a general room temperature within a range of 5 to 30°C. Among these, a method in which the film is allowed to cool at room temperature is preferable from the viewpoint of ease of production.

In the description herein, the term "solidification" means that the material is solid at ordinary temperature, that is, the material does not have fluidity at 23°C in a non-pressurized state. However, the film after solidification may have tackiness.

### Examples

Next, specific examples of the present invention will be described, but the present invention is not limited to these examples.

### <Metal Material A and Metal Material B>

C1100 (tough pitch copper) having a width of 25 mm, a length of 100 mm, and a thickness of 0.1 mm was prepared as the metal material A and the metal material B.

### <Weight-Average Molecular Weight, Heat of Fusion, and Epoxy Equivalent of Thermoplastic Epoxy Resin and Phenoxy Resin>

The weight-average molecular weight, heat of fusion, and epoxy equivalent of each of the thermoplastic epoxy resin and the phenoxy resins were determined as follows.

### (Weight-average molecular weight)

The thermoplastic epoxy resin or the phenoxy resin was dissolved in tetrahydrofuran, and measurement was performed under the following conditions using Prominence 501 (manufactured by Showa Science Co., Ltd., Detector: Shodex (registered trademark) RI-501 (manufactured by Resonac Corporation)).
Column: LF-804 (manufactured by Resonac Corporation) × 2
Column temperature: 40°C
Sample: 0.4% by mass tetrahydrofuran solution of resin
Flow rate: 1 mL/min
Eluent: Tetrahydrofuran
Calibration method: Conversion using standard polystyrene

### (Heat of fusion)

2 to 10 mg of the thermoplastic epoxy resin or the phenoxy resin were weighed, placed in an aluminum pan, and the temperature was increased from 23°C to 200°C at a rate of 10°C/min using a DSC (DSC8231 manufactured by Rigaku Corporation), thereby obtaining a DSC curve. The heat of fusion was calculated from the area of the endothermic peak at the time of melting of the DSC curve and the above weighed value.

### (Epoxy equivalent)

The epoxy equivalent was measured in accordance with JIS K-7236:2001 and converted into a value as a resin solid content. In the case of a simple mixture not accompanied by a reaction, the epoxy equivalent was calculated from each epoxy equivalent and the content thereof.

### <Example 1>

### (Film P-1)

A reactor equipped with a stirrer, a reflux condenser, a gas introduction tube, and a thermometer was charged with 1.0 equivalent (203 g) of jER (registered trademark) 1007 (manufactured by Mitsubishi Chemical Corporation, bisphenol A type epoxy resin, weight-average molecular weight: 10,000), 1.0 equivalent (12.5 g) of bisphenol S, 2.4 g of triphenylphosphine, and 1,000 g of methyl ethyl ketone, and the temperature was raised to 100°C while stirring in a nitrogen gas atmosphere. The reaction mixture was visually confirmed to be dissolved, and cooled to 40°C to obtain a resin composition having a solid content of about 20% by mass. The solvent was removed therefrom to obtain a solid. A non-adhesive fluororesin film (NITOFLON (registered trademark) No. 900UL, manufactured by Nitto Denko Corporation) was installed on the upper plate and the lower plate of a press machine, the above-described solid was disposed on the non-adhesive fluororesin film of the lower plate, then the press machine was heated to 160°C, and the resin composition was heated and compressed for 2 hours to obtain a film P-1 having a solid content of 100% by mass and a thickness of 100 µm. The weight-average molecular weight was about 37,000. The epoxy equivalent was equal to or higher than the detection limit (i.e., few epoxy groups were present). In DSC, a peak of heat of fusion was not detected, and it was confirmed to be amorphous.

### (Connected body)

The end portion B of the metal material B was overlapped on the end portion A of the metal material A with the film P-1 cut into a size of 20 × 25 mm interposed therebetween, and the resultant was placed on a hot plate set at 200°C. In the place where the metal material A and the metal material B were overlapped with the film P-1 interposed therebetween, the metal material A was placed on the hot plate, a glass plate of 3 × 3 cm was placed on the metal material B, a weight of 2 kg was placed on the glass plate, and welding was performed for 1 minute. After the welding, the glass plate and the weight were temporarily removed, and the film P-1 was cooled to room temperature.

### <Example 2>

### (Film P-2)

A reactor equipped with a stirrer, a reflux condenser, a gas introduction tube, and a thermometer was charged with 20 g of Phenotohto (registered trademark) YP-50S (manufactured by NIPPON STEEL Chemical & Material Co., Ltd., phenoxy resin, weight-average molecular weight: 50,000) and 80 g of cyclohexanone, and the temperature was raised to 60°C while stirring. The reaction mixture was visually confirmed to be dissolved, and cooled to 40°C to obtain a resin composition having a solid content of 20% by mass. The resin composition was applied onto a release film and dried at 120°C for 30 minutes to obtain a film P-2 having a solid content of 100% by mass and a thickness of 100 µm. The epoxy equivalent was equal to or higher than the detection limit (i.e., few epoxy groups were present). In DSC, a peak of heat of fusion was not detected, and it was confirmed to be amorphous.

### (Connected body)

A connected body was produced in the same manner as in Example 1 except that P-2 was used as the film.

### <Example 3>

### (Film P-3)

A reactor equipped with a stirrer, a reflux condenser, a gas introduction tube, and a thermometer was charged with 20 g of Phenotohto (registered trademark) YPS-007A (manufactured by NIPPON STEEL Chemical & Material Co., Ltd., phenoxy resin, weight-average molecular weight: 42,000) and 80 g of cyclohexanone, and the temperature was raised to 60°C while stirring. The reaction mixture was visually confirmed to be dissolved, and cooled to 40°C to obtain a resin composition having a solid content of 20% by mass. The resin composition was applied onto a release film and dried at 120°C for 30 minutes to obtain a film P-3 having a solid content of 100% by mass and a thickness of 100 µm. The epoxy equivalent was equal to or higher than the detection limit (i.e., few epoxy groups were present). In DSC, a peak of heat of fusion was not detected, and it was confirmed to be amorphous.

### (Connected body)

A connected body was produced in the same manner as in Example 1 except that P-3 was used as the film.

### <Example 4>

### (Connected body)

A connected body was produced in the same manner as in Example 1 except that a crystalline olefin-based hot-melt adhesive film (ELPHAN (registered trademark) NT-120, manufactured by Nihon Matai Co., Ltd., thickness before production of connected body: 80 µm) was used as the film, and the temperature of the hot plate was set at 150°C. The peak of the heat of fusion in DSC was 60 J/g.

### <Comparative Example 1>

### (Connected body)

Using two pieces of pressure-sensitive adhesive tape (SEKISUI cellophane tape (registered trademark) No. 252 manufactured by Sekisui Chemical Co., Ltd., thickness before production of the connected body: 50 µm) cut into a size of 30 × 25 mm, as shown in Fig. 2, the end portion B of the metal material B was attached to the end portion A of the metal material A so as to cover both surfaces of the overlapped portion in which the end portion B of the metal material B was overlapped in a range of a width of 25 mm × a length of 20 mm, thereby producing a connected body.

### <Comparative Example 2>

### (Connected body)

The end portion B of the metal material B was overlapped on the end portion A of the metal material A with a double-sided pressure-sensitive adhesive tape (NITOMS PROSELF, manufactured by Nitoms, Inc.) cut into a size of 20 × 25 mm interposed therebetween, a glass plate of 3 × 3 cm was placed on the end portion B, a weight of 2 kg was placed on the glass plate and allowed to stand for 1 minute, and then the weight was removed to produce a connected body.

### <Comparative Example 3>

### (Connected body)

A connected body was produced in the same manner as in Comparative Example 2 except that a heat-resistant double-sided pressure-sensitive adhesive tape (polyimide tape PB416-20-30, manufactured by AS ONE Corporation) cut into a size of 20 × 25 mm was used as the pressure-sensitive adhesive tape.

### [Breaking Strength Measurement_Tensile Test]

The tensile strength of the connected bodies obtained in Examples 1 to 4 and Comparative Examples 1 to 3 was measured. As measurement conditions, a universal testing machine Autograph AG-X Plus (manufactured by Shimadzu Corporation) was used, a distance between grippers was set to 13 cm, and a tensile speed was set to 5 mm/min. The measurement results (breaking strength) are shown in Table 1.

The measurement was performed under the respective conditions of "ordinary temperature: 23°C" and "ethylene glycol immersion". In Table 1, the measured values under the conditions of "ethylene glycol immersion" are values obtained by immersing the sample in ethylene glycol at 40°C for 5 days, taking it out, immersing it in water for 5 seconds, wiping off the ethylene glycol, photographing the appearance of the sample, allowing the sample to stand for 20 to 30 minutes, and performing the measurement at ordinary temperature.

### [Line Contamination Property]

The potential contamination of the production line by pressure-sensitive adhesive components was evaluated.

As described in the Background Art section, in connection by a pressure-sensitive adhesive tape, particularly when the pressure-sensitive adhesive tape is peeled off due to an accident in a production line, contamination of the production line becomes a large problem. In this evaluation, after the tensile test, the presence or absence of exposure of the layer containing the pressure-sensitive adhesive component was observed in a state where the metal materials A and B were separated from each other, and the line contamination property was evaluated.

Specifically, after the tensile test, in a state where the metal materials A and B were separated from each other, a case where the layer containing the pressure-sensitive adhesive component was exposed was evaluated as "NG (there was a possibility of line contamination)", and a case where the layer containing the pressure-sensitive adhesive component was not exposed was evaluated as "Good (there was no possibility of line contamination)". The evaluation results are shown in Table 1.

When a pressure-sensitive adhesive tape is used for connection, peeling due to cohesive failure is generally less likely to occur. The separation of the metal materials A and B is likely to be caused by interfacial peeling, and in this case, the adhesive surface is exposed after the breakage (that is, after the separation of the metal materials A and B).

In each of Examples 1 to 4, a connected body is produced by using a phase change (solid to liquid to solid) of a film containing a thermoplastic resin as a main component, and metal materials A and B are adhered by a mechanism different from adhesion, and therefore, the above evaluations are all "Good (there was no possibility of line contamination)".

**Table 1**

| | | Example 1 | Example 2 | Example 3 | Example 4 |
|---|---|---|---|---|---|
| Film properties | Shape | Film | Film | Film | Film |
| | Resin main component | Thermoplastic epoxy resin | Phenoxy resin | Phenoxy resin | Olefin-based |
| | Weight-average molecular weight | 37,000 | 50,000 | 42,000 | Not measurable |
| | Heat of fusion [J/g] | 0 | 0 | 0 | 60 |
| | Epoxy equivalent [g/eq] | Equal to or higher than detection limit | Equal to or higher than detection limit | Equal to or higher than detection limit | Not measurable |
| | Thickness (before joining) | 100 µm | 100 µm | 100 µm | 80 µm |
| | Thickness (after joining) | 80 µm | 80 µm | 80 µm | 40 µm |
| Breaking strength [N/25 mm] | Ordinary temperature | 399 | 536 | 169 | 500 |
| | Ethylene glycol immersion | 96 | 97 | 76 | 51 |
| Line contamination property | | Good | Good | Good | Good |

**Table 1 (continued)**

| | | Comparative Example 1 | Comparative Example 2 | Comparative Example 3 |
|---|---|---|---|---|
| | Shape | Pressure-sensitive adhesive tape | Pressure-sensitive adhesive tape | Pressure-sensitive adhesive tape |
| | Weight-average molecular weight | Not measurable | Not measurable | Not measurable |
| | Heat of fusion [J/g] | Not measurable | Not measurable | Not measurable |
| | Epoxy equivalent [g/eq] | Not measurable | Not measurable | Not measurable |
| | Thickness (before joining) | 50 µm | 50 µm | 50 µm |
| | Thickness (after joining) | 50 µm | 50 µm | 50 µm |
| Breaking strength [N/25 mm] | Ordinary temperature | 223 | 286 | 172 |
| | Ethylene glycol immersion | 34 | 95 | 89 |
| Line contamination property | | NG | NG | NG |

### Industrial Applicability

The present invention is suitable for, for example, an application of connecting a frame material in a production line of an LED lead frame or an application of connecting a substrate material in a production line of a flexible printed circuit board, but is not particularly limited to these applications.

### Reference Signs List

1: Metal material A
2: Metal material B
3: Film (film constituting the connected body)
4: Overlapping portion
5: End portion A
6: End portion B
7: Single-sided pressure-sensitive adhesive tape

## Claims

1. A connected body of metal materials comprising an overlapping portion in which an end portion A of a metal material A and an end portion B of a metal material B are overlapped with each other via a film containing a thermoplastic resin as a main component, wherein the film is a film that has undergone melting and solidification in the overlapping portion.

2. The connected body of metal materials according to claim 1, wherein the metal material A and the metal material B are at least one selected from the group consisting of a metal plate having a thickness of 1 mm or less and a metal foil having a thickness of 1 mm or less.

3. The connected body of metal materials according to claim 1, wherein the metal material A and the metal material B have a belt-like shape, and the metal material A and the metal material B are connected so as to be continuous in a longitudinal direction.

4. The connected body of metal materials according to claim 3, wherein the metal material A and the metal material B are roll materials obtained by winding at least one selected from the group consisting of a metal plate and a metal foil into a roll shape.

5. The connected body of metal materials according to claim 1, wherein the film is interposed over an entire surface where the end portion A and the end portion B overlap each other.

6. The connected body of metal materials according to claim 1, wherein the thermoplastic resin is an amorphous thermoplastic resin.

7. The connected body of metal materials according to claim 6, wherein the amorphous thermoplastic resin is at least one selected from the group consisting of a thermoplastic epoxy resin and a phenoxy resin.

8. The connected body of metal materials according to claim 7, wherein the amorphous thermoplastic resin is an amorphous thermoplastic resin having an epoxy equivalent of 1,600 or more or an amorphous thermoplastic resin not containing an epoxy group.

9. The connected body of metal materials according to claim 1, wherein the film has a pressure-sensitive adhesive material, and the pressure-sensitive adhesive material performs a temporary fixing function of the film and does not perform an adhesive function.

10. A method for connecting metal materials, comprising: connecting a metal material A and a metal material B by melting and solidifying a film in an overlapping portion in which an end portion A of the metal material A and an end portion B of the metal material B are overlapped with each other via the film containing a thermoplastic resin as a main component.

11. The method for connecting metal materials according to claim 10, wherein the film has a thickness of 10 µm to 3 mm.
